# EUROPEAN PATENT APPLICATION

(11) **EP 4 498 352 A1**
(43) Date of publication of application: **29.01.2025**
(21) Application number: 24190707.0
(22) Date of filing: 24.07.2024
(51) Int. Cl.: G08G 5/00, G08G 5/06, G10L 15/26

(54) **AIR TRAFFIC CONTROL COMMUNICATION TO TAXI PATH PLANNING**

(30) Priority: 24.07.2023 US 202318225382
(71) Applicant: ROSEMOUNT AEROSPACE INC., Burnsville, MN 55306-4898 (US)
(72) Inventor: MANGIO, Anthony, Eden Prairie, 55347 (US)
(74) Representative: Dehns

(57) **Abstract**

A method includes converting audio to text, converting the text to a taxi path, and using a look-up table (LUT) to check for obstructions in the taxi path. The method includes issuing a warning if there are one or more obstructions in the taxi path based on the LUT or else refraining from issuing a warning if there are not one or more obstructions in the taxi path based on the LUT. Converting audio to text can include using a machine learning model. Before converting the audio to text, the method can include checking communications between a pilot and air traffic control (ATC) for keywords relevant to taxiing. Converting audio to text can be performed upon detecting the keywords in the audio. The audio can include words spoken by ATC to the pilot and/or words spoken by the pilot to ATC.

## Description

### BACKGROUND

### 1. Field

The present disclosure relates to air traffic control communications, and more particularly to communication of taxi paths for aircraft at airports.

### 2. Description of Related Art

Pilots have to memorize taxiing callouts from air traffic control to various airports. Sometimes pilots do not know the restricted pathways at a given airport for the aircraft they are currently taxiing. With this traditional methodology, damage can occur to an aircraft when mistakes or miscommunications lead a pilot to taxi an aircraft into a taxi way that is restricted for their aircraft type, e.g. a taxiway that is too narrow for the wings of a large aircraft.

The conventional techniques have been considered satisfactory for their intended purpose. However, there is an ever present need for improved systems and methods for air traffic control communication and taxi path planning. This disclosure provides a solution for this need.

### SUMMARY

A method includes converting audio to text, converting the text to a taxi path, and using a look-up table (LUT) to check for obstructions in the taxi path. The method includes issuing a warning if there are one or more obstructions in the taxi path based on the LUT or else refraining from issuing a warning if there are not one or more obstructions in the taxi path based on the LUT.

Converting audio to text can include using a machine learning model. Before converting the audio to text, the method can include checking communications between a pilot and air traffic control (ATC) for keywords relevant to taxiing. Converting audio to text can be performed upon detecting the keywords in the audio. The audio can include words spoken by ATC to the pilot and/or words spoken by the pilot to ATC. The audio can include words spoken by the pilot to confirm a communication from ATC.

Using the LUT to check for obstructions in the taxi path can include correlating the taxi path with flight log information to check for obstructions in the taxi path. The flight log information can include a list of taxiways for an airport where the taxi path is located. The flight log information can include an aircraft type. Checking for obstructions can include determining if the taxi path includes obstructions for the aircraft type.

Issuing a warning can include displaying the taxi path in red on a cockpit display for a pilot to see. Displaying the taxi path in red can include displaying the taxi path in red on a map displayed on an electronic flight bag (EFB). Issuing a warning can include issuing an audio warning from a cockpit speaker for a pilot to hear.

Refraining from issuing a warning can include displaying the taxi path in green on a cockpit display for a pilot to see. Displaying the taxi path in green can include displaying the taxi path in green on a map displayed on an electric flight bag (EFB).

The warning can be issued in response to the pilot mistakenly entering a taxi path not indicated by ATC. The warning can be issued in response to the pilot entering a taxi path indicated by ATC that ATC indicated by mistake. The warning can be issued for a taxi path that is open to some aircraft types but that includes fixed obstructions for an aircraft type of an aircraft being taxied by the pilot.

A system includes a taxi path verification module including machine readable instructions configured to cause the taxi path verification module to perform a method as described above. The taxi path verification module can be incorporated in an electronic flight bag (EFB), in an aircraft cockpit, or in a computer system external to an any aircraft cockpit.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, schematically showing communication between air traffic control and an aircraft cockpit;
Fig. 2 is a schematic view of an embodiment of a method constructed in accordance with the present disclosure, showing a logic flow schematic for checking taxi paths for obstructions based on air traffic control communications, airport taxi path data, and aircraft type;
Fig. 3 is a schematic view of a display of a taxi path on a map according to the method of Fig. 1, wherein there is a warning issued; and
Fig. 4 is a schematic view of the display of Fig. 3, showing the taxi path map with no warning issued.

### DETAILED DESCRIPTION OF THE PREFERRED EMBODIMENTS

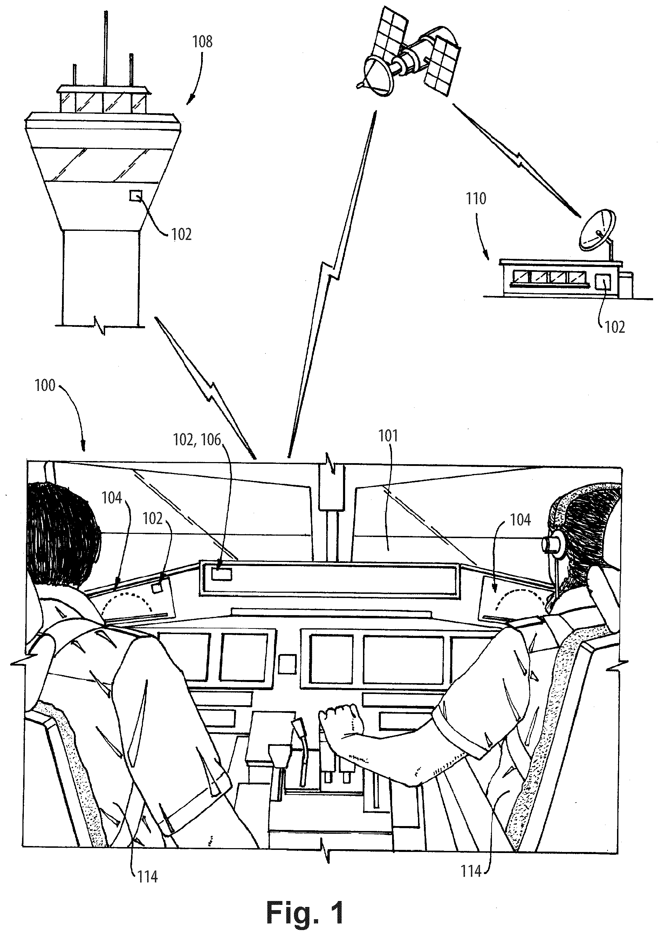

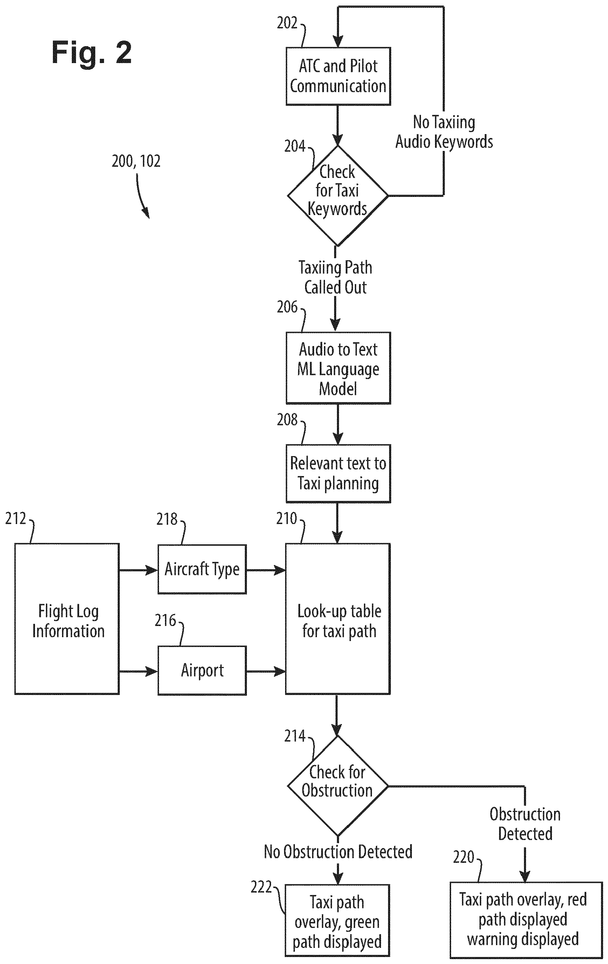

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-4, as will be described. The systems and methods described herein can be used to reduce incidents of aircraft entering taxi paths at airports that are restricted for the aircraft type, using audio of communication between pilots and air traffic control (ATC), and to provide taxi plan verification for pilots. i.e. plots the route for the pilot to call back to ATC for confirmation, versus having the pilots write down the called out path from ATC.

The system 100 includes a taxi path verification module 102 including machine readable instructions configured to cause the taxi path verification module 102 to perform a method as described below. The taxi path verification module 102 can be incorporated in an electronic flight bag (EFB) 104, in a fixed portion of an aircraft cockpit 106, or in a computer system external to an any aircraft cockpit, e.g. in the control tower 108 or at a facility 110 of a third party service provider. If the module 102 is external to the cockpit 106, it can connect to the cockpit 106 wirelessly, e.g. through a satellite network 112 or other wireless communication link as indicted by the jagged lines in Fig. 1.

With reference now to Fig. 2, the method 200 implemented by the module 102 of Fig. 1 is described. The method 200 includes monitoring audio communications between air traffic control (ATC) and the pilot 114 (labeled in Fig. 1) as indicated in Fig. 2 by with box 202. The audio can include words spoken by the pilot to confirm a communication from ATC. The method includes checking communications between a pilot and (ATC) for keywords relevant to taxiing, as indicated in Fig. 2 by box 204. If no keywords are detected, the module 102 can continue to monitor the communications waiting for keywords. Once relevant taxiing key words are detected, e.g. a taxiing path is called out in the audio data, the method includes converting audio to text, as indicated in Fig. 2 by box 206. Converting audio to text can include using a machine learning model onboard the module 102, or provided by an outside service connected to the module 102. The audio communications can include words spoken by ATC to the pilot and/or words spoken by the pilot to ATC.

With continued reference to Fig. 2, the method includes converting the relevant text to a taxi path, as indicated in Fig. 2 by box 208. The module 102 can then apply a look-up table (LUT), as indicated in Fig. 2 by box 210, to check for obstructions in the taxi path, as indicated in Fig. 2 by box 214. Using the LUT to check for obstructions in the taxi path includes correlating the taxi path with flight log information 212, which can be located in an EFB 104 labeled in Fig. 1, for example, to check for obstructions in the taxi path. The flight log information 212 includes a list of taxiways for the current airport 216 where the taxi path and aircraft 101 are located. The flight log information 212 also includes an aircraft type 218 for the aircraft 101, labeled in Fig. 1, that is taxiing. Checking for obstructions includes determining if the taxi path includes obstructions for the current aircraft type, e.g. for a taxi path that is open for small aircraft but that is too narrow for the currently taxiing aircraft 101 labeled in Fig. 1.

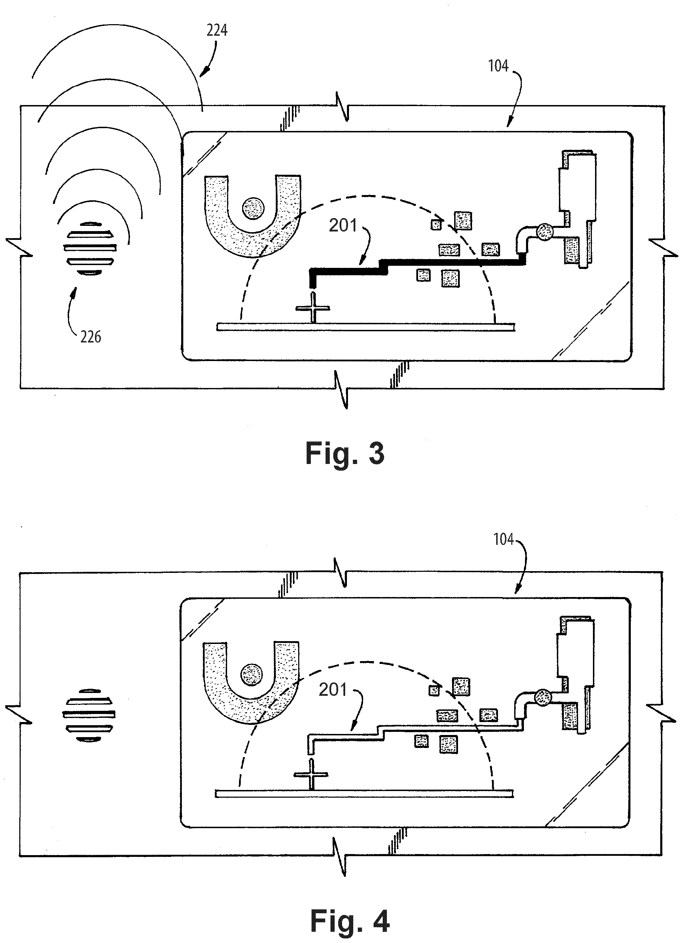

The method includes issuing a warning to the pilot 114 if there are one or more obstructions in the taxi path based on the LUT, as indicated in Fig. 2 by box 220 or else refraining from issuing a warning if there are not one or more obstructions in the taxi path based on the LUT, as indicated in Fig. 2 by box 222. As shown in Fig. 3 where the heavy line for taxi path 201 is meant to indicate red coloring for taxi path 201, issuing a warning includes displaying the taxi path 201 in red in a map overlay on a cockpit display, e.g. on the EFB 104 and/or on a fixed display in the cockpit 106, for a pilot 114 to see (the pilot 104 and cockpit 106 labeled in Fig. 1). Displaying the taxi path 201 in red includes displaying the taxi path in red on a map displayed on an electronic flight bag (EFB). The warning can also include issuing an audio warning 224 from a cockpit speaker 226 for a pilot 114 to hear. As shown in Fig. 4, refraining from issuing a warning can include displaying the taxi path in green on a map overlay on a cockpit display for a pilot 114 to see, e.g. on a fixed cockpit display or EFB 104 as described above for the red colored warning, where the outlined taxi path 201 in Fig. 4 is meant to indicate green coloring. Those skilled in the art will readily appreciate that any suitable coloring or other visual scheme, such as blinking, text, or the like, can be used in addition too or in lieu of the red and green colors in Figs. 3-4.

With reference again to Fig. 1, the module 102 can issue the warning in response to various scenarios. For example, the module 102 can issue the warning if the pilot 114 mistakenly enters a taxi path not indicated by ATC, if the pilot 114 enters a taxi path indicated by ATC that ATC indicated by mistake, and generally if the pilot 114 enters a taxi path that is open to some aircraft types but that includes fixed obstructions, e.g. obstructions that are part of fixed airport infrastructure or the like, for an aircraft type of the aircraft 101 currently being taxied by the pilot 114.

Systems and methods as disclosed herein provide various potential benefits including the following. They add an additional feature that can be implemented on existing EFB's. The additional confirmation and overlay can augment the pilot's ability to conform to ATC instructions and prevent restricted taxi movement. If an aircraft is not equipped with ATC Datalink this invention provides an alternate solution to the AUO-0603-A directive. Over the air updates using (ATC datalink) on Aircraft Interface Device (AID) 2.0, available from Collins Aerospace of Charlotte, North Carolina, and other connected devices can enhance the system's obstruction detect look-up table (taxi-way outage, plane traffic, and the like) providing additional value to the user.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "controller." A "circuit," "module," or "controller" can include one or more portions of one or more separate physical hardware and/or software components that can together perform the disclosed function of the "circuit," "module," or "controller", or a "circuit," "module," or "controller" can be a single self-contained unit (e.g., of hardware and/or software). Furthermore, aspects of this disclosure may take the form of a computer program product embodied in one or more computer readable medium(s) having computer readable program code embodied thereon. Embedded systems that have multiple CPU's, GPU, in-memory compute, other specialized neural network hardware can be used in this application.

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The methods and systems of the present disclosure, as described above and shown in the drawings, provide for reduced incidents of aircraft entering taxi paths at airports that are restricted for the aircraft type, using audio of communication between pilots and air traffic control (ATC). While the apparatus and methods of the subject disclosure have been shown and described with reference to preferred embodiments, those skilled in the art will readily appreciate that changes and/or modifications may be made thereto without departing from the scope of the subject disclosure.

## Claims

1. A method comprising:
converting audio to text;
converting the text to a taxi path;
using a look-up table (LUT) to check for obstructions in the taxi path; and
issuing a warning if there are one or more obstructions in the taxi path based on the LUT or else refraining from issuing a warning if there are not one or more obstructions in the taxi path based on the LUT.

2. The method as recited in claim 1, wherein converting audio to text includes using a machine learning model.

3. The method as recited in claim 1 or 2, wherein using the LUT to check for obstructions in the taxi path includes correlating the taxi path with flight log information to check for obstructions in the taxi path.

4. The method as recited in claim 3, wherein the flight log information includes a list of taxiways for an airport where the taxi path is located.

5. The method as recited in claim 3 or 4, wherein the flight log information includes an aircraft type, wherein checking for obstructions includes determining if the taxi path includes obstructions for the aircraft type.

6. The method as recited in any preceding claim, wherein issuing a warning includes displaying the taxi path in red on a cockpit display for a pilot to see, and optionally wherein displaying the taxi path in red includes displaying the taxi path in red on a map displayed on an electronic flight bag (EFB).

7. The method as recited in any preceding claim, wherein issuing a warning includes issuing an audio warning from a cockpit speaker for a pilot to hear.

8. The method as recited in any preceding claim, wherein refraining from issuing a warning includes displaying the taxi path in green on a cockpit display for a pilot to see, and optionally wherein displaying the taxi path in green includes displaying the taxi path in green on a map displayed on an electric flight bag (EFB).

9. The method as recited in any preceding claim, further comprising, before converting the audio to text, checking communications between a pilot and air traffic control (ATC) for keywords relevant to taxiing, wherein the converting audio to text is performed upon detecting the keywords in the audio.

10. The method as recited in claim 9, wherein the audio includes words spoken by ATC to the pilot; and/or wherein the audio includes words spoken by the pilot to ATC, including words spoken by the pilot to confirm a communication from ATC.

11. The method as recited in claim 9 or 10, wherein the warning is issued in response to the pilot mistakenly entering a taxi path not indicated by ATC; and/or wherein the warning is issued in response to the pilot entering a taxi path indicated by ATC that ATC indicated by mistake; and/or wherein the warning is issued for a taxi path that is open to some aircraft types but that includes fixed obstructions for an aircraft type of an aircraft being taxied by the pilot.

12. A system comprising:
a taxi path verification module (102) including machine readable instructions configured to cause the taxi path verification module (102) to:
convert audio to text;
convert the text to a taxi path;
use a look-up table, LUT (210), to check for obstructions in the taxi path; and
issue a warning if there are one or more obstructions in the taxi path based on the LUT (210) or else refrain from issuing a warning if there are not one or more obstructions in the taxi path based on the LUT (210).

13. The system as recited in claim 12, wherein the taxi path verification module (102) is incorporated in an electronic flight bag (EFB).

14. The system as recited in claim 12 or 13, wherein the taxi path verification module (102) is incorporated in an aircraft cockpit.

15. The system as recited in any of claims 12-14, wherein the taxi path verification module (102) is incorporated in a computer system external to an any aircraft cockpit.
